# EUROPEAN PATENT APPLICATION

(11) **EP 2 884 683 A1**
(43) Date of publication of application: **17.06.2015**
(21) Application number: 13842700.0
(22) Date of filing: 18.04.2013
(51) Int. Cl.: H04L 1/00

(54) **PARAMETER SETTING METHOD, TERMINAL, AND BASE STATION IN DATA TRANSMISSION SERVICE**

(30) Priority: 28.09.2012 CN 201210370181
(71) Applicant: Huawei Technologies Co., Ltd., Longgang District Shenzhen, Guangdong 518129 (CN)
(72) Inventor: CHEN, Bing, Shenzhen Guangdong 518129 (CN); HAN, Guanglin, Shenzhen Guangdong 518129 (CN)
(74) Representative: Pfenning, Meinig & Partner GbR
(86) International application number: PCT/CN2013/074341
(87) International publication number: WO 2014/048108

(57) **Abstract**

The present invention provides a method for setting a parameter in a data transmission service, a terminal, and a base station. The method includes: determining, by a terminal according to a terminal status, time-to-live of a packet on a network node; and sending, by the terminal, a survival report to a base station, where the survival report includes the time-to-live, so that the base station sets a packet transmission parameter according to the time-to-live. According to the embodiments of the present invention, user experience can be ensured.

## Description

This application claims priority to Chinese Patent Application No. 201210370181.8, filed with the Chinese Patent Office on September 28, 2012 and entitled "METHOD FOR SETTING PARAMETER IN DATA TRANSMISSION SERVICE, TERMINAL, AND BASE STATION", which is incorporated herein by reference in its entirety.

### TECHNICAL FIELD

The present invention relates to wireless communications technologies, and in particular, to a method for setting a parameter in a data transmission service, a terminal, and a base station.

### BACKGROUND

In a Long Term Evolution (Long Term Evolution, LTE) system, an air interface protocol stack between a user equipment (User Equipment, UE) and an evolved NodeB (evolved NodeB, eNodeB) includes a user plane and a control plane. A user plane protocol stack includes a physical layer, a Media Access Control (Media Access Control, MAC) layer, a Radio Link Control (Radio Link Control, RLC) layer, and a Packet Data Convergence Protocol (Packet Data Convergence Protocol, PDCP) layer; and the control plane further includes a Radio Resource Control (Radio Resource Control, RRC) layer in addition to the foregoing architectures. In processes of RRC initial connection establishment, connection reconfiguration, and connection re-establishment, an RRC entity needs to configure parameters for a PDCP entity. One of the parameters is duration of a discard timer at the PDCP layer, and the duration may be 50ms, 100ms, 150ms, 300ms, 500ms, 700ms, 1500ms, or infinite. After the duration of the discard timer at the PDCP layer is configured, the PDCP entity configures one discard timer for each service data unit (Service Data Unit, SDU). When receiving an SDU, the PDCP entity starts a corresponding discard timer. When the discard timer expires, the PDCP entity discards the corresponding SDU and a corresponding protocol data unit (Protocol Data Unit, PDU). If the corresponding PDU has been delivered to a lower layer, the PDCP entity sends a discarding instruction command to the lower layer.

In the prior art, the foregoing duration of the discard timer at the PDCP layer is set according to a quality of service (Quality of Service, QoS) requirement for network transmission. In this way, the QoS requirement can be met as a whole only, but a related parameter cannot be dynamically set, and therefore user experience cannot be ensured either.

### SUMMARY

In view of this, embodiments of the present invention provide a method for setting a parameter in a data transmission service, a terminal, and a base station, so as to solve a problem in the prior art that user experience cannot be ensured.

According to a first aspect, a method for setting a parameter in a data transmission service is provided, where the method includes:
determining, by a terminal, time-to-live of a packet on a network node according to a terminal status, where the terminal status is time, which can be maintained, for playing a currently buffered packet, or the terminal status includes a triggering event and time, which can be maintained, for playing a currently buffered packet; and
sending, by the terminal, a survival report to a base station, where the survival report includes the time-to-live, so that the base station sets a packet transmission parameter according to the time-to-live.

In a first possible implementation manner of the first aspect, the determining time-to-live of a packet on a network node according to a terminal status includes:
when the terminal status is the time, which can be maintained, for playing the currently buffered packet, determining the time-to-live according to time for which currently playing a video frame lasts and time, which can be maintained, for playing a remaining packet in a buffer except the video frame that is currently played; or determining the time-to-live according to time, which can be maintained, for playing a remaining packet in a buffer except the video frame that is currently played;
   or,
when the terminal status includes the triggering event and the time, which can be maintained, for playing the currently buffered packet, determining the time-to-live according to the triggering event of the terminal, time for which currently playing a video frame lasts and time, which can be maintained, for playing a remaining packet in a buffer except the video frame that is currently played; or according to the triggering event of the terminal and time, which can be maintained, for playing a remaining packet in a buffer except the video frame that is currently played.

In a second possible implementation manner of the first aspect, before the sending, by the terminal, a survival report to a base station, the method further includes:
configuring, by the terminal, a reporting policy, where the reporting policy includes information about the triggering event, so that the terminal reports the survival report when the triggering event occurs; or
receiving, by the terminal, a configuration message sent by the base station, where the configuration message includes information about the triggering event, so that the terminal reports the survival report when the triggering event occurs.

In a third possible implementation manner of the first aspect, the triggering event includes any one of the following items:
buffered data is blank, or playing stops due to blank buffered data; or
initial buffering ends, and playing starts; or
buffering ends due to a playing stop, and playing starts; or
playing stops due to a user behavior; or
buffering reaches a preset threshold; or
a packet loss is detected; or
a configured reporting period arrives; or
the base station performs triggering.

In a fourth possible implementation manner of the first aspect, before the sending, by the terminal, a survival report to a base station, the method further includes:
receiving, by the terminal, a triggering message sent by the base station, where the triggering message is used to trigger the terminal to send the survival report to the base station.

With reference to the fourth possible implementation manner of the first aspect, in a fifth possible implementation manner, the triggering message is sent after the base station detects a packet loss in at least one of the following layers: a Packet Data Convergence Protocol PDCP layer, a Radio Link Control RLC layer, and a Radio Link Control MAC layer; or the triggering message is sent after the base station detects a cell handover of the terminal.

With reference to the fourth possible implementation manner of the first aspect, in a sixth possible implementation manner, the survival report further includes information about a triggering event that has occurred, so that the base station further sets the packet transmission parameter according to the information about the triggering event that has occurred.

In a seventh possible implementation manner of the first aspect, the time-to-live is time-to-live of a first packet, the survival report further includes identification information of the first packet, and the first packet is a next packet that needs to be received by the terminal, so that the base station transmits the first packet within the time-to-live according to the packet transmission parameter.

With reference to any one of the foregoing possible implementation manners of the first aspect, in an eighth possible implementation manner, the packet transmission parameter includes at least one of the following items:
duration of a discard timer at the PDCP layer;
the maximum number of hybrid automatic repeat request HARQ retransmissions at the MAC layer;
the maximum number of automatic repeat request ARQ retransmissions at the RLC layer; and
a user scheduling policy.

According to a second aspect, a method for setting a parameter in a data transmission service is provided, where the method includes:
receiving, by a base station, a survival report sent by a terminal, where the survival report includes time-to-live of a packet on a network node, the time-to-live is determined by the terminal according to a terminal status, and the terminal status is time, which can be maintained, for playing a currently buffered packet, or the terminal status includes a triggering event and time, which can be maintained, for playing a currently buffered packet; and
setting, by the base station, a packet transmission parameter according to the time-to-live, so that the base station transmits the packet according to the packet transmission parameter.

In a first possible implementation manner of the second aspect, before the receiving, by a base station, a survival report sent by a terminal, the method further includes:
sending, by the base station, a configuration message to the terminal, where the configuration message includes information about the triggering event, so that the terminal reports the survival report when the triggering event occurs.

In a first possible implementation manner of the second aspect, the triggering event includes any one of the following items:
buffered data is blank, or playing stops due to blank buffered data; or
initial buffering ends, and playing starts; or
buffering ends due to a playing stop, and playing starts; or
playing stops due to a user behavior; or
buffering reaches a preset threshold; or
a packet loss is detected; or
a configured reporting period arrives; or
the base station performs triggering.

In a third possible implementation manner of the second aspect, before the receiving, by a base station, a survival report sent by a terminal, the method further includes:
sending, by the base station, a triggering message to the terminal, where the triggering message is used to trigger the terminal to send the survival report to the base station.

With reference to the third possible implementation manner of the second aspect, in a fourth possible implementation manner, the sending, by the base station, a triggering message to the terminal includes:
sending, by the base station, the triggering message after detecting a packet loss in at least one of the following layers: a Packet Data Convergence Protocol PDCP layer, a Radio Link Control RLC layer, and a Radio Link Control MAC layer; or
sending, by the base station, the triggering message after detecting a cell handover of the terminal.

With reference to the first possible implementation manner of the second aspect, in a fifth possible implementation manner, the survival report further includes information about a triggering event that has occurred, so that the base station further sets the packet transmission parameter according to the information about the triggering event that has occurred.

In a sixth possible implementation manner of the second aspect, the survival report further includes identification information of a first packet, the first packet is a next packet that needs to be received by the terminal, and the method further includes:
transmitting, by the base station, the first packet within the time-to-live according to the packet transmission parameter.

With reference to any one of the foregoing possible implementation manners of the second aspect, in a seventh possible implementation manner, the packet transmission parameter includes at least one of the following items:
duration of a discard timer at the PDCP layer;
the maximum number of hybrid automatic repeat request HARQ retransmissions at the MAC layer;
the maximum number of automatic repeat request ARQ retransmissions at the RLC layer; and
a user scheduling policy.

According to a third aspect, a terminal is provided, where the terminal includes:
a processor, configured to determine time-to-live of a packet on a network node according to a terminal status, where the terminal status is time, which can be maintained, for playing a currently buffered packet, or the terminal status includes a triggering event and time, which can be maintained, for playing a currently buffered packet; and
a sender, configured to send a survival report to a base station, where the survival report includes the time-to-live, so that the base station sets a packet transmission parameter according to the time-to-live.

In a first possible implementation manner of the third aspect, the processor is specifically configured to:
when the terminal status is the time, which can be maintained, for playing the currently buffered packet, determine the time-to-live according to time for which currently playing a video frame lasts and time, which can be maintained, for playing a remaining packet in a buffer except the video frame that is currently played; or determine the time-to-live according to time, which can be maintained, for playing a remaining packet in a buffer except the video frame that is currently played;
   or,
when the terminal status includes the triggering event and the time, which can be maintained, for playing the currently buffered packet, determine the time-to-live according to the triggering event of the terminal, time for which currently playing a video frame lasts, and time, which can be maintained, for playing a remaining packet in a buffer except the video frame that is currently played; or according to the triggering event of the terminal and time, which can be maintained, for playing a remaining packet in a buffer except the video frame that is currently played.

In a second possible implementation manner of the third aspect, the terminal further includes:
a memory, configured to store a configured reporting policy, where the reporting policy includes information about the triggering event, so that the terminal reports the survival report when the triggering event occurs; or
a first receiver, configured to receive a configuration message sent by the base station, where the configuration message includes information about the triggering event, so that the terminal reports the survival report when the triggering event occurs.

In a third possible implementation manner of the third aspect, the triggering event includes any one of the following items:
buffered data is blank, or playing stops due to blank buffered data; or
initial buffering ends, and playing starts; or
buffering ends due to a playing stop, and playing starts; or
playing stops due to a user behavior; or
buffering reaches a preset threshold; or
a packet loss is detected; or
a configured reporting period arrives; or
the base station performs triggering.

In a fourth possible implementation manner of the third aspect, the terminal further includes:
a second receiver, configured to receive a triggering message sent by the base station, where the triggering message is used to trigger the terminal to send the survival report to the base station; where
the sender is specifically configured to send the survival report to the base station when the second receiver receives the triggering message.

With reference to the fourth possible implementation manner of the third aspect, in a fifth possible implementation manner, the triggering message received by the second receiver is sent after the base station detects a packet loss in at least one of the following layers: a Packet Data Convergence Protocol PDCP layer, a Radio Link Control RLC layer, and a Radio Link Control MAC layer; or the triggering message is sent after the base station detects a cell handover of the terminal.

With reference to the fourth possible implementation manner of the third aspect, in a sixth possible implementation manner, the survival report sent by the sender further includes information about a triggering event that has occurred, so that the base station further sets the packet transmission parameter according to the information about the triggering event that has occurred.

In a seventh possible implementation manner of the third aspect, the time-to-live determined by the processor is time-to-live of a first packet, the survival report sent by the sender further includes identification information of the first packet, and the first packet is a next packet that needs to be received by the terminal, so that the base station transmits the first packet within the time-to-live according to the packet transmission parameter.

With reference to any one of the foregoing possible implementation manners of the third aspect, in an eighth possible implementation manner, the packet transmission parameter includes at least one of the following items:
duration of a discard timer at the PDCP layer;
the maximum number of hybrid automatic repeat request HARQ retransmissions at the MAC layer;
the maximum number of automatic repeat request ARQ retransmissions at the RLC layer; and
a user scheduling policy.

According to a fourth aspect, a base station is provided, where the base station includes:
a receiver, configured to receive a survival report sent by a terminal, where the survival report includes time-to-live of a packet on a network node, the time-to-live is determined by the terminal according to a terminal status, and the terminal status is time, which can be maintained, for playing a currently buffered packet, or the terminal status includes a triggering event and time, which can be maintained, for playing a currently buffered packet; and
a processor, configured to set a packet transmission parameter according to the time-to-live, so that the processor transmits the packet according to the packet transmission parameter.

In a first possible implementation manner of the fourth aspect, the base station further includes:
a first sender, configured to send a configuration message to the terminal, where the configuration message includes information about the triggering event, so that the terminal reports the survival report when the triggering event occurs.

In a second possible implementation manner of the fourth aspect, the triggering event includes any one of the following items:
buffered data is blank, or playing stops due to blank buffered data; or
initial buffering ends, and playing starts; or
buffering ends due to a playing stop, and playing starts; or
playing stops due to a user behavior; or
buffering reaches a preset threshold; or
a packet loss is detected; or
a configured reporting period arrives; or
the base station performs triggering.

In a third possible implementation manner of the fourth aspect, the base station further includes:
a second sender, configured to send a triggering message to the terminal, where the triggering message is used to trigger the terminal to send the survival report to the base station.

With reference to the third possible implementation manner of the fourth aspect, in a fourth possible implementation manner, the processor is further configured to detect the following event: a packet loss occurs in at least one of the following layers: a Packet Data Convergence Protocol PDCP layer, a Radio Link Control RLC layer, and a Radio Link Control MAC layer; or a cell handover of the terminal occurs; and
the second sender is specifically configured to send the triggering message when the processor detects the event.

With reference to the first possible implementation manner of the fourth aspect, in a fifth possible implementation manner, the survival report received by the receiver further includes information about a triggering event that has occurred, so that the base station further sets the packet transmission parameter according to the information about the triggering event that has occurred.

In a sixth possible implementation manner of the fourth aspect, the survival report further includes identification information of a first packet, and the base station further includes:
a third sender, configured to transmit the first packet within the time-to-live according to the packet transmission parameter.

With reference to any one of the foregoing possible implementation manners of the fourth aspect, in a seventh possible implementation manner, the packet transmission parameter includes at least one of the following items:
duration of a discard timer at the PDCP layer;
the maximum number of hybrid automatic repeat request HARQ retransmissions at the MAC layer;
the maximum number of automatic repeat request ARQ retransmissions at the RLC layer; and
a user scheduling policy.

By using the foregoing technical solutions, a terminal determines time-to-live according to a current situation of a packet, and can dynamically determine the time-to-live and send the time-to-live to a base station. The base station sets a related parameter according to the time-to-live, and then, when the base station transmits the packet according to the related parameter, a user experience effect can be ensured.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show some embodiments of the present invention, and persons of ordinary skill in the art may still derive other drawings from these accompanying drawings without creative efforts.
FIG. 1 is a schematic flowchart of an embodiment of a method for setting a parameter in a data transmission service according to the present invention;
FIG. 2 is a schematic flowchart of another embodiment of a method for setting a parameter in a data transmission service according to the present invention;
FIG. 3a is a schematic flowchart of another embodiment of a method for setting a parameter in a data transmission service according to the present invention;
FIG. 3b is a schematic flowchart of another embodiment of a method for setting a parameter in a data transmission service according to the present invention;
FIG. 3c is a schematic flowchart of another embodiment of a method for setting a parameter in a data transmission service according to the present invention;
FIG. 4a is a schematic flowchart of another embodiment of a method for setting a parameter in a data transmission service according to the present invention;
FIG. 4b is a schematic flowchart of another embodiment of a method for setting a parameter in a data transmission service according to the present invention;
FIG. 4c is a schematic flowchart of another embodiment of a method for setting a parameter in a data transmission service according to the present invention;
FIG. 4d is a schematic flowchart of another embodiment of a method for setting a parameter in a data transmission service according to the present invention;
FIG. 5a is a schematic flowchart of another embodiment of a method for setting a parameter in a data transmission service according to the present invention;
FIG. 5b is a schematic flowchart of another embodiment of a method for setting a parameter in a data transmission service according to the present invention;
FIG. 5c is a schematic flowchart of another embodiment of a method for setting a parameter in a data transmission service according to the present invention;
FIG. 6a is a schematic flowchart of another embodiment of a method for setting a parameter in a data transmission service according to the present invention;
FIG. 6b is a schematic flowchart of another embodiment of a method for setting a parameter in a data transmission service according to the present invention;
FIG. 7 is a schematic structural diagram of an embodiment of a terminal according to the present invention; and
FIG. 8 is a schematic structural diagram of an embodiment of a base station according to the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by persons of ordinary skill in the art based on the embodiments of the present invention without creative efforts shall fall within the protection scope of the present invention.

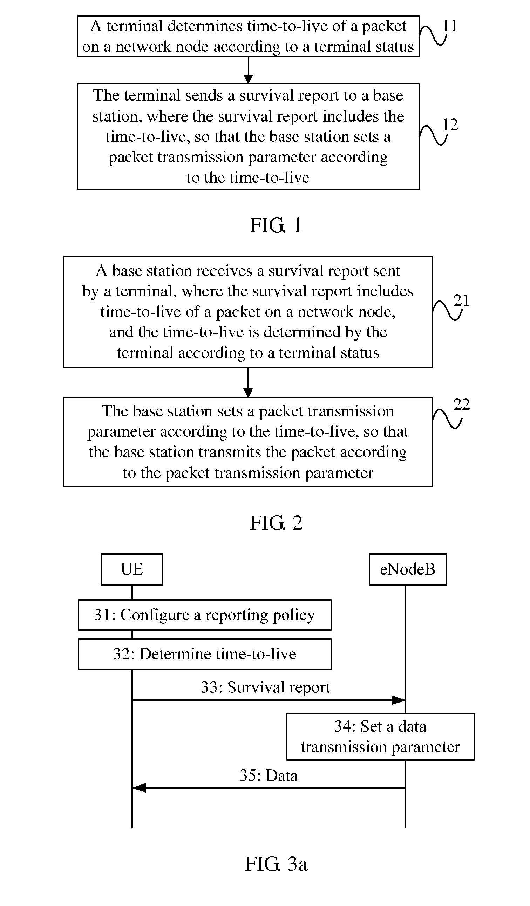

FIG. 1 is a schematic flowchart of an embodiment of a method for setting a parameter in a data transmission service according to the present invention, where the method includes:

Step 11: A terminal determines time-to-live of a packet on a network node according to a terminal status, where the terminal status is time, which can be maintained, for playing a currently buffered packet, or the terminal status includes a triggering event and time, which can be maintained, for playing a currently buffered packet; it may be that, when the terminal status is the time, which can be maintained, for playing the currently buffered packet, the time-to-live is determined according to time for which currently playing a video frame lasts and time, which can be maintained, for playing a remaining packet in a buffer except the video frame that is currently played, or the time-to-live is determined according to time, which can be maintained, for playing a remaining packet in a buffer except the video frame that is currently played;
or,
when the terminal status includes the triggering event and the time, which can be maintained, for playing the currently buffered packet, the time-to-live is determined according to the triggering event of the terminal, time for which currently playing a video frame lasts, and time, which can be maintained, for playing a remaining packet in a buffer except the video frame that is currently played; or according to the triggering event of the terminal and time, which can be maintained, for playing a remaining packet in a buffer except the video frame that is currently played.

For example, a sum of the time for which currently playing the video frame lasts and the time, which can be maintained, for playing the remaining packet in the buffer except the video frame that is currently played is determined as the time-to-live; or the time, which can be maintained, for playing the remaining packet in the buffer except the video frame that is currently played is determined as the time-to-live.

For example, if the time-to-live is represented by *Tₛᵤᵣ, t*₁ represents time for which the terminal currently plays a video frame lasts, and *t*₂ represents time, which can be maintained, for playing a remaining packet in a buffer of the terminal except the video frame that is currently played, *Tₛᵤᵣ* = *t*₁ + *t*₂ or *Tₛᵤᵣ* = *t*₂*.*

When a video is played, the terminal may first buffer a packet that is downloaded from a network side, where the packet may include one or more video frames; afterwards the terminal may acquire a video frame from the buffer for playing. A packet in the buffer except the video frame that is currently played is a remaining packet.

Each video frame has standard playing time. For example, if time for playing each video frame is 0.3ms, time for which a current video frame lasts is 0.3ms, and time, which can be maintained, for playing a remaining packet may be determined according to the number of video frames in the remaining packet and standard time. For example, if data of the video frames in the remaining packet is N, the time, which can be maintained, for playing the remaining packet is Nx0.3ms.

That is, the time-to-live is equal to a playing time interval between a current playing point to the last valid packet in the buffer, and is equal to a maximum transmission delay of a next unreceived packet; or the time-to-live is simplified as the time, which can be maintained, for playing the remaining packet.

Alternatively, the time-to-live may also be determined according to the triggering event in addition to the foregoing time, which can be maintained, for playing the currently buffered packet. For example, when learning that the triggering event is a playing stop due to a user behavior, the terminal may add a period of time to the time-to-live that is determined according to the foregoing time, which can be maintained, for playing the currently buffered packet, that is, in this case, the time-to-live is: *Tₛᵤᵣ* = *t*₁ + *t*₂ + *δ* or *Tₛᵤᵣ* = *t*₂ + *δ,* where *δ* may be set according to an actual situation. For content of a specific triggering event, reference may be made to subsequent embodiments. In addition, according to a specific triggering event, an amount of time to be added to or subtracted from *t*₁ + *t*₂ or *t*₂ may also be set.

Step 12: The terminal sends a survival report to a base station, where the survival report includes the time-to-live, so that the base station sets a packet transmission parameter according to the time-to-live.

The base station may transmit the packet according to the packet transmission parameter.

Optionally, the packet transmission parameter may include at least one of the following items:
duration of a discard timer at a PDCP layer;
the maximum number of hybrid automatic repeat request (Hybrid Automatic Repeat Request, HARQ) retransmissions at a MAC layer;
the maximum number of automatic repeat request (Automatic Repeat Request, ARQ) retransmissions at an RLC layer; and
a user scheduling policy.

For example, the base station may set time that has a smallest error when compared with the time-to-live as the duration of the discard timer at the PDCP layer, where the time is among configurable time such as 50ms, 100ms, 150ms, 300ms, 500ms, 700ms, 1500ms, or infinite; and afterwards, the base station may perform packet discarding processing according to the duration; or
the base station divides, according to the time-to-live, the time-to-live by packet retransmission time to obtain the maximum number of retransmissions; and afterwards, the base station may retransmit the packet before the maximum number of retransmissions is exceeded; or
the user scheduling policy includes a scheduling priority and a radio resource; when the time-to-live is relatively short, a higher scheduling priority is set, and more radio resources are allocated; when the time-to-live is relatively long, a lower scheduling priority is set, and fewer radio resources are allocated; and afterwards, the base station may perform packet scheduling and transmission according to the scheduling policy.

Accordingly, referring to FIG. 2, steps executed on a base station side may include:

Step 21: A base station receives a survival report sent by a terminal, where the survival report includes time-to-live of a packet on a network node, the time-to-live is determined by the terminal according to a terminal status, and the terminal status is time, which can be maintained, for playing a currently buffered packet, or the terminal status includes a triggering event and time, which can be maintained, for playing a currently buffered packet.

Step 22: The base station sets a packet transmission parameter according to the time-to-live, so that the base station transmits the packet according to the packet transmission parameter.

In this embodiment, a terminal determines time-to-live according to a current situation of a packet, and can dynamically determine the time-to-live and send the time-to-live to a base station. The base station sets a related parameter according to the time-to-live, and then, when the base station transmits the packet according to the related parameter, it is ensured, to the largest extent, that the packet can be effectively sent to the terminal; therefore, a user experience effect can be ensured.

In different systems, the terminal and the base station have different names. For example, the terminal may be an MS, a UE, or the like, and the base station may be a NodeB, an eNodeB, or the like. A UE and an eNodeB are used as examples in embodiments of the present invention for description.

FIG. 3a is a schematic flowchart of another embodiment of a method for setting a parameter in a data transmission service according to the present invention. In this embodiment, that a reporting policy and a survival report are configured on a UE is used as an example. This embodiment includes:

Step 31: Configure a reporting policy on a UE, where the reporting policy includes information about a triggering event.

The reporting policy is used to instruct a terminal to report, when the triggering event occurs, a survival report, so that the terminal reports the survival report when the triggering event occurs.

The triggering event may include at least one of the following items:
buffered data is blank, or playing stops due to blank buffered data; or
initial buffering ends, and playing starts; or
buffering ends due to a playing stop, and playing starts; or
playing stops due to a user behavior; or
buffering reaches a preset threshold; or
a packet loss is detected;
a configured reporting period arrives; and
a base station performs triggering.

Step 32: The UE determines time-to-live.

For specific content, reference may be made to step 11.

Step 33: The UE sends a survival report to an eNodeB according to the configured reporting policy, where the report includes the time-to-live.

For example, when the reporting policy is reporting according to a reporting period, the UE reports the survival report when the reporting period arrives; or
when the reporting policy is that buffered data is blank, the UE reports the survival report when the buffered data is blank.

Further, the survival report may further include information about a triggering event that has occurred, and the triggering event that has occurred includes any one of the following items:
buffered data is blank, or playing stops due to blank buffered data; or
initial buffering ends, and playing starts; or
buffering ends due to a playing stop, and playing starts; or
playing stops due to a user behavior; or
buffering reaches a preset threshold; or
a packet loss is detected; or
a configured reporting period arrives; and
a base station performs triggering.

Step 34: The eNodeB sets a data transmission parameter according to the time-to-live, where the data transmission parameter may include at least one of the following items:
duration of a discard timer at a PDCP layer;
the maximum number of HARQ retransmissions at a MAC layer;
the maximum number of ARQ retransmissions at an RLC layer; and
a scheduling policy.

For a specific setting method, reference may be made to step 12.

In addition, the information, which is reported by the terminal, about the triggering event may be used as another reference for adjusting the data transmission parameter. For example, when the triggering event is a playing stop due to a user behavior, because a user does not play a video in this case, it may be considered that the time-to-live is appropriately increased, or the time-to-live is set to a maximum value, and until the terminal instructs to start playing, the data transmission parameter is set according to the reported time-to-live.

Step 35: The eNodeB sends data to the UE according to the data transmission parameter.

For example, data is discarded after the discard timer at the PDCP layer expires, or data is retransmitted before the maximum number of retransmissions is exceeded, and data is discarded when the maximum number of retransmissions is exceeded, or data is transmitted on a set radio resource according to a set priority sequence.

In this embodiment, a UE triggers reporting of a survival report, so that an eNodeB can dynamically set a related parameter according to time-to-live, so as to satisfy a user experience effect.

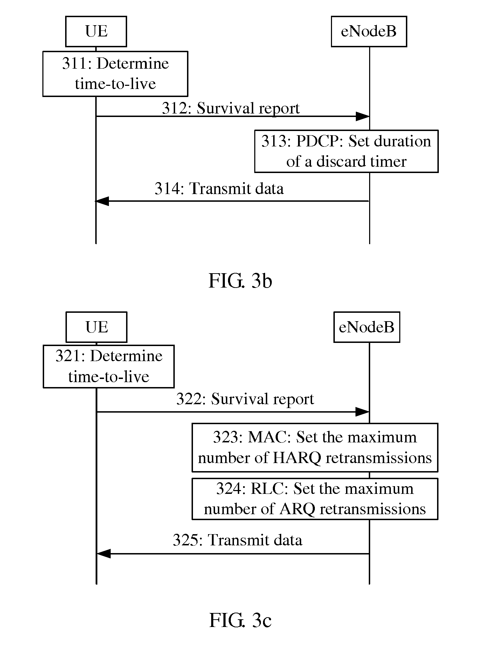

Optionally, as shown in FIG. 3b or FIG. 3c, the following parameter setting may be performed.

Referring to FIG. 3b, this embodiment includes:

Step 311: A UE determines time-to-live (Survivor Time Estimation).

Step 312: The UE sends a survival report to an eNodeB, where the survival report carries the time-to-live (SurvivorTimeReporting).

Step 313: Set duration of a discard timer at a PDCP layer of the eNodeB according to the time-to-live (PDCP: DiscardTimer Configuration).

Step 314: The eNodeB transmits data according to the set duration of the discard timer (Data Transmission).

For specific content of calculating the time-to-live and setting the duration of the discard timer, reference may be made to the foregoing embodiments. Details are not described herein again. Referring to FIG. 3c, this embodiment includes:

Step 321: A UE determines time-to-live (Survivor Time Estimation).

Step 322: The UE sends a survival report to an eNodeB, where the survival report carries the time-to-live (SurvivorTimeReporting).

Step 323: Set the maximum number of HARQ retransmissions at a MAC layer of the eNodeB according to the time-to-live (MAC: maxHARQ Configuration).

Step 324: Set the maximum number of ARQ retransmissions at an RLC layer of the eNodeB according to the time-to-live (RLC: maxRetxThreshold Configuration).

Step 325: The eNodeB transmits data according to the set maximum number of HARQ retransmissions and/or the set maximum number of ARQ retransmissions (Data Transmission).

For specific content of calculating the time-to-live, setting the maximum number of HARQ retransmissions, and setting the maximum number of ARQ retransmissions, reference may be made to the foregoing embodiments. Details are not described herein again.

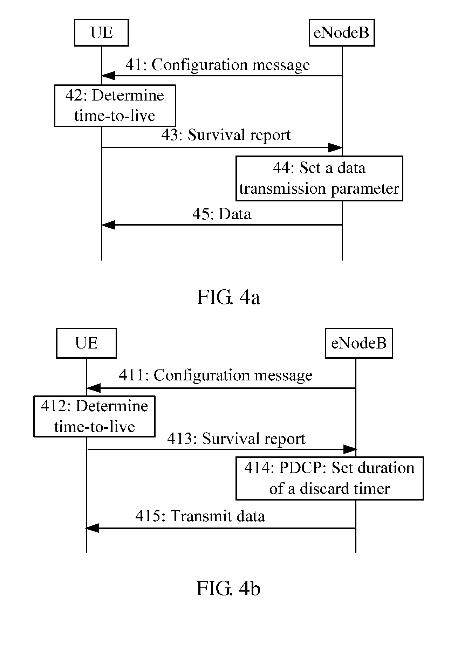

FIG. 4a is a schematic flowchart of another embodiment of a method for setting a parameter in a data transmission service according to the present invention. In this embodiment, that an eNodeB sends a configuration message to a UE, and the UE reports a survival report according to the configuration message is used as an example. This embodiment includes:

Step 41: An eNodeB sends a configuration message to a UE, where the configuration message includes information about a triggering event.

The configuration message is used to instruct a terminal to report, when a triggering event occurs, a survival report, so that the terminal reports the survival report when the triggering event occurs.

The triggering event may include at least one of the following items:
buffered data is blank, or playing stops due to blank buffered data; or
initial buffering ends, and playing starts; or
buffering ends due to a playing stop, and playing starts; or
playing stops due to a user behavior; or
buffering reaches a preset threshold; or
a packet loss is detected;
a configured reporting period arrives; and
a base station performs triggering.

Step 42: The UE determines time-to-live.

Step 43: The UE sends a survival report to the eNodeB according to the configuration message, where the report includes the time-to-live.

For example, when the configuration message includes a reporting period, the survival report is reported when the reporting period arrives; or
when the configuration message includes that buffered data is blank, the survival report is reported when the buffered data is blank.

Further, the survival report may further include information about a triggering event that has occurred, and the triggering event that has occurred includes any one of the following items:
buffered data is blank, or playing stops due to blank buffered data; or
initial buffering ends, and playing starts; or
buffering ends due to a playing stop, and playing starts; or
playing stops due to a user behavior; or
buffering reaches a preset threshold; or
a packet loss is detected; or
a configured reporting period arrives; and
a base station performs triggering.

Step 44: The eNodeB sets a data transmission parameter according to the time-to-live, where the data transmission parameter may include at least one of the following items:
duration of a discard timer at a PDCP layer;
the maximum number of HARQ retransmissions at a MAC layer;
the maximum number of ARQ retransmissions at an RLC layer; and
a scheduling policy.

Step 45: The eNodeB sends data to the UE according to the data transmission parameter.

For specific content of step 42, step 44, and step 45, reference may be made to step 32, step 34, and step 35.

In this embodiment, an eNodeB sends configuration information to a UE, and the UE triggers, according to the configuration information, reporting of a survival report, so that the eNodeB can dynamically set a related parameter according to time-to-live, so as to satisfy a user experience effect.

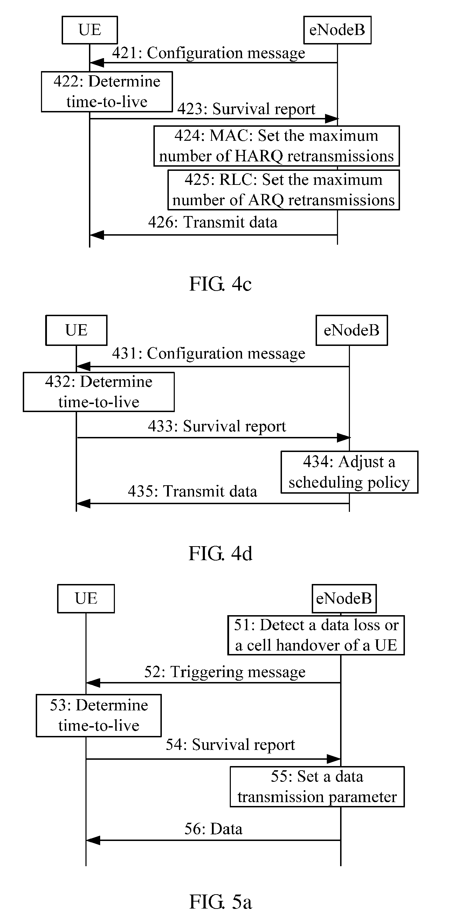

Optionally, as shown in FIG. 4b, FIG. 4c, or FIG. 4d, the following parameter setting may be performed.

Referring to FIG. 4b, this embodiment includes:

Step 411: An eNodeB sends a configuration message to a UE (SurvivorTimeConfiguration).

Step 412: The UE determines time-to-live (Survivor Time Estimation).

Step 413: The UE sends a survival report to the eNodeB according to the configuration message, where the survival report carries the time-to-live (SurvivorTimeReporting).

Step 414: Set duration of a discard timer at a PDCP layer of the eNodeB according to the time-to-live (PDCP: DiscardTimer Configuration).

Step 415: The eNodeB transmits data according to the set duration of the discard timer (Data Transmission).

For specific content of calculating the time-to-live, setting the duration of the discard timer, and the configuration message, reference may be made to the foregoing embodiments. Details are not described herein again.

Referring to FIG. 4c, this embodiment includes:

Step 421: An eNodeB sends a configuration message to a UE (SurvivorTimeConfiguration).

Step 422: The UE determines time-to-live (Survivor Time Estimation).

Step 423: The UE sends a survival report to the eNodeB, where the survival report carries the time-to-live (SurvivorTimeReporting).

Step 424: Set the maximum number of HARQ retransmissions at a MAC layer of the eNodeB according to the time-to-live (MAC: maxHARQ Configuration).

Step 425: Set the maximum number of ARQ retransmissions at an RLC layer of the eNodeB according to the time-to-live (RLC: maxRetxThreshold Configuration).

Step 426: The eNodeB transmits data according to the set maximum number of HARQ retransmissions and/or the set maximum number of ARQ retransmissions (Data Transmission).

For specific content of calculating the time-to-live, setting the maximum number of HARQ retransmissions, setting the maximum number of ARQ retransmissions, and the configuration message, reference may be made to the foregoing embodiments. Details are not described herein again.

Referring to FIG. 4d, this embodiment includes:

Step 431: An eNodeB sends a configuration message to a UE (SurvivorTimeConfiguration).

Step 432: The UE determines time-to-live (Survivor Time Estimation).

Step 433: The UE sends a survival report to the eNodeB according to the configuration message, where the survival report carries the time-to-live (SurvivorTimeReporting).

Step 434: The eNodeB adjusts a scheduling policy (Schedule Decision).

Step 435: The eNodeB transmits data according to an adjusted scheduling policy (Data Transmission).

For specific content of calculating the time-to-live, adjusting the scheduling policy, and the configuration message, reference may be made to the foregoing embodiments. Details are not described herein again.

FIG. 5a is a schematic flowchart of another embodiment of a method for setting a parameter in a data transmission service according to the present invention. In this embodiment, that an eNodeB triggers a UE to report a survival report is used as an example. This embodiment includes:

Step 51: An eNodeB detects a packet loss or a cell handover of a UE.

Step 51 may be that a packet loss is detected in at least one of the following layers: a PDCP layer, an RCL layer, and a MAC layer.

Step 52: The eNodeB sends a triggering message to the UE, where the triggering message is used to trigger the UE to report a survival report.

Step 53: The UE determines time-to-live.

Step 54: The UE sends the survival report to the eNodeB, where the report includes the time-to-live.

Further, the survival report may further include information about a triggering event that has occurred. In this embodiment, the triggering event is that a base station performs triggering.

Step 55: The eNodeB sets a data transmission parameter according to the time-to-live, where the data transmission parameter may include at least one of the following items:
duration of a discard timer at a PDCP layer;
the maximum number of HARQ retransmissions at a MAC layer;
the maximum number of ARQ retransmissions at an RLC layer; and
a scheduling policy.

Step 56: The eNodeB sends data to the UE according to the data transmission parameter.

For specific content of step 53, step 55, and step 56, reference may be made to step 32, step 34, and step 35.

In this embodiment, an eNodeB triggers a UE to report a survival report, so that the eNodeB can dynamically set a related parameter according to time-to-live, so as to satisfy a user experience effect.

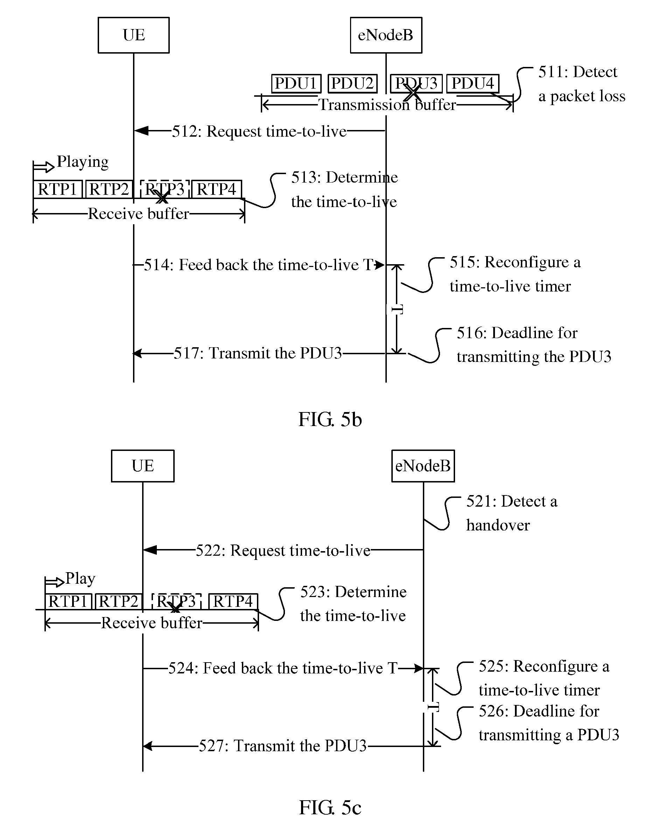

Optionally, as shown in FIG. 5b or FIG. 5c, the following events may be detected.

Referring to FIG. 5b, this embodiment includes:

Step 511: An eNodeB detects a packet loss (Detect PackLoss).

Step 512: The eNodeB requests time-to-live from a UE (Request Survivor Time).

Step 512 may be that the eNodeB sends a triggering message to the UE, as described in the foregoing embodiment.

Step 513: The UE determines the time-to-live (Survivor Time Estimation).

Step 514: The UE feeds back the time-to-live T to the eNodeB (Feedback "T").

Step 514 may be that the UE sends a survival report to the eNodeB, where the survival report carries the time-to-live T.

Step 515: The eNodeB reconfigures a time-to-live timer (Survivor Timer Re-configuration).

Duration of the timer may be set to the time-to-live.

Step 516: The eNodeB determines a deadline for transmitting a packet such as a PDU3 (Deadline for Transmitting PDU3).

Time after the set duration of the timer arrives may be the deadline for transmitting a packet.

Step 517: The eNodeB transmits the PDU3 according to the deadline for the PDU3 (PDU3 Transmission).

For specific content of calculating the time-to-live, detecting the packet loss, and reconfiguring the timer, reference may be made to the foregoing embodiments. Details are not described herein again.

Referring to FIG. 5c, this embodiment includes:

Step 521: An eNodeB detects a handover (Detect Handover).

Step 522: The eNodeB requests time-to-live from a UE (Request Survivor Time).

Step 522 may be that the eNodeB sends a triggering message to the UE.

Step 523: The UE determines the time-to-live (Survivor Time Estimation).

Step 524: The UE feeds back the time-to-live T to the eNodeB (Feedback "T").

Step 524 may be that the UE sends a survival report to the eNodeB, where the survival report carries the time-to-live T.

Step 525: The eNodeB reconfigures a time-to-live timer (Survivor Timer Re-configuration).

Duration of the timer may be set to the time-to-live.

Step 526: The eNodeB determines a deadline for transmitting a packet such as a PDU3 (Deadline for Transmitting PDU3).

Time after the set duration of the timer arrives may be the deadline for transmitting a packet.

Step 527: The eNodeB transmits the PDU3 according to the deadline for the PDU3 (PDU3 Transmission).

For specific content of calculating the time-to-live, detecting the handover, and reconfiguring the timer, reference may be made to the foregoing embodiments. Details are not described herein again.

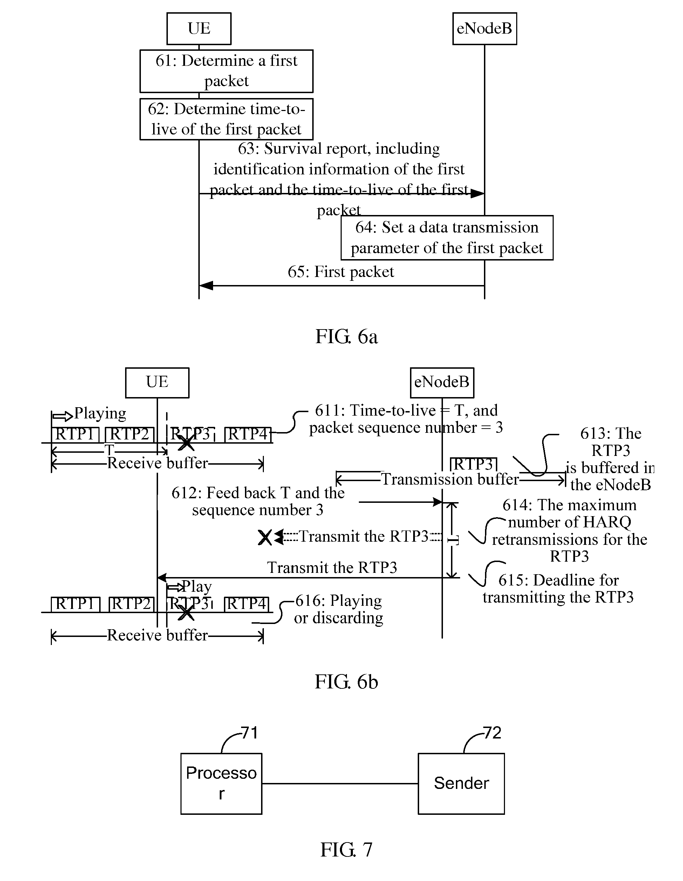

FIG. 6a is a schematic flowchart of another embodiment of a method for setting a parameter in a data transmission service according to the present invention, where the method includes:

Step 61: A UE determines a first packet, where the first packet is a next packet that needs to be received.

Step 62: The UE determines time-to-live of the first packet.

The time-to-live of the first packet may also be determined by using the method in the foregoing embodiments. For example, a sum of time for which currently playing a video frame lasts and time, which can be maintained, for playing a remaining packet in a buffer except the video frame that is currently played is determined as the time-to-live of the first packet; or time, which can be maintained, for playing a remaining packet in a buffer except the video frame that is currently played is determined as the time-to-live of the first packet.

Step 63: The UE sends a survival report to an eNodeB, where the survival report includes identification information of the first packet and the time-to-live of the first packet.

Assuming that the first packet is an RTP3 and the time-to-live is represented by T, the survival report may include (3, T).

Optionally, as described in the foregoing embodiments, the survival report may be sent when any one of the following triggering events occurs:
buffered data is blank, or playing stops due to blank buffered data; or
initial buffering ends, and playing starts; or
buffering ends due to a playing stop, and playing starts; or
playing stops due to a user behavior; or
buffering reaches a preset threshold; or
a packet loss is detected; or
a configured reporting period arrives; and
a base station performs triggering.

The survival report may be a reporting policy, as shown in IFG. 3, which includes information about the foregoing triggering event and is configured on the UE, or may be a configuration message, as shown in FIG. 4, which includes information about the foregoing triggering event and is sent by the eNodeB to the UE, or may be a survival report, as shown in FIG. 5, which is directly reported by the UE according to a triggering message that is sent by the eNodeB.

Optionally, the survival report may further include information about a triggering event that has occurred.

Step 64: The eNodeB sets a data transmission parameter of the first packet according to the time-to-live, where the data transmission parameter may include at least one of the following items:
duration of a discard timer at a PDCP layer;
the maximum number of HARQ retransmissions at a MAC layer;
the maximum number of ARQ retransmissions at an RLC layer; and
a scheduling policy.

What is similar to the foregoing embodiments is that an eNodeB may set a data transmission parameter only according to time-to-live, or may set a data transmission parameter according to time-to-live and information about a triggering event that has occurred.

Step 65: The eNodeB sends the first packet to the UE according to the data transmission parameter of the first packet.

This embodiment differs from the foregoing embodiments in that, time-to-live of each packet and a corresponding data transmission parameter are calculated for each packet, which may improve accuracy of a parameter related to each packet.

Optionally, referring to FIG. 6b, this embodiment includes:

Step 611: A UE determines time-to-live and a packet sequence number, where it is assumed that the time-to-live is T and the packet sequence number is 3 (Survivor Time=T; Exp PN=3).

Step 612: The UE feeds back T and the sequence number 3 to an eNodeB (Feedback T&"3").

Step 612 may be that the UE sends a survival report to the eNodeB, where the survival report carries the time-to-live T and the sequence number 3.

Step 613: A packet such as an RTP3 is buffered in the eNodeB (RTP3 buffered in eNodeB).

Step 614: The eNodeB sets the maximum number of HARQ retransmissions for the RTP3 according to the time-to-live T and the sequence number 3 (HARQ Multi-Tx for RTP3).

Step 615: The eNodeB determines a deadline for the RTP3 according to the time-to-live T and the sequence number 3 (Deadline for transmitting RTP3).

Step 616: The UE plays or discards the RTP3 (Playing or Skipping RTP3).

For specific processing content of the UE and/or the eNodeB, reference may be made to the foregoing embodiments. Details are not described herein again.

FIG. 7 is a schematic structural diagram of an embodiment of a terminal according to the present invention, where the terminal includes a processor 71 and a sender 72. The processor 71 is configured to determine time-to-live of a packet on a network node according to a terminal status, where the terminal status is time, which can be maintained, for playing a currently buffered packet, or the terminal status includes a triggering event and time, which can be maintained, for playing a currently buffered packet. The sender 72 is configured to send a survival report to a base station, where the survival report includes the time-to-live, so that the base station sets a packet transmission parameter according to the time-to-live.

Optionally, the processor is specifically configured to:
when the terminal status is the time, which can be maintained, for playing the currently buffered packet, determine the time-to-live according to time for which currently playing a video frame lasts and time, which can be maintained, for playing a remaining packet in a buffer except the video frame that is currently played; or determine the time-to-live according to time, which can be maintained, for playing a remaining packet in a buffer except the video frame that is currently played;
   or,
when the terminal status includes the triggering event and the time, which can be maintained, for playing the currently buffered packet, determine the time-to-live according to the triggering event of the terminal, time for which currently playing a video frame lasts, and time, which can be maintained, for playing a remaining packet in a buffer except the video frame that is currently played; or according to the triggering event of the terminal and time, which can be maintained, for playing a remaining packet in a buffer except the video frame that is currently played.

Optionally, the terminal may further include:
a memory, configured to store a configured reporting policy, where the reporting policy includes information about the triggering event, so that the terminal reports the survival report when the triggering event occurs; or
a first receiver, configured to receive a configuration message sent by the base station, where the configuration message includes information about the triggering event, so that the terminal reports the survival report when the triggering event occurs.

The triggering event includes any one of the following items:
buffered data is blank, or playing stops due to blank buffered data; or
initial buffering ends, and playing starts; or
buffering ends due to a playing stop, and playing starts; or
playing stops due to a user behavior; or
buffering reaches a preset threshold; or
a packet loss is detected; or
a configured reporting period arrives; or
the base station performs triggering.

Optionally, the terminal may further include:
a second receiver, configured to receive a triggering message sent by the base station, where the triggering message is used to trigger the terminal to send the survival report to the base station; where
the sender is specifically configured to send the survival report to the base station when the second receiver receives the triggering message.

Optionally, the triggering message received by the second receiver is sent after the base station detects a packet loss in at least one of the following layers: a PDCP layer, an RLC layer, and a MAC layer; or the triggering message is sent after the base station detects a cell handover of the terminal.

Optionally, the survival report sent by the sender further includes information about a triggering event that has occurred, so that the base station further sets the packet transmission parameter according to the information about the triggering event that has occurred.

Optionally, the time-to-live determined by the processor is time-to-live of a first packet, the survival report sent by the sender further includes identification information of the first packet, and the first packet is a next packet that needs to be received by the terminal, so that the base station transmits the first packet within the time-to-live according to the packet transmission parameter.

Optionally, the packet transmission parameter includes at least one of the following items:
duration of a discard timer at the PDCP layer;
the maximum number of HARQ retransmissions at the MAC layer;
the maximum number of ARQ retransmissions at the RLC layer; and
a user scheduling policy.

It may be understood that the foregoing first receiver and the foregoing second receiver may be disposed separately, or may be disposed together in one physical device. Further, the foregoing first receiver and/or the foregoing second receiver and the sender may also be disposed separately or disposed together.

The foregoing processor may be a general processor (CPU), a digital signal processor (DSP), an application-specific integrated circuit (ASIC), a field programmable gate array (FPGA), or another programmable logic component, a discrete gate or a transistor logic device, or a discrete hardware component.

In this embodiment, a terminal determines time-to-live according to a current situation of a packet, and can dynamically determine the time-to-live and send the time-to-live to a base station. The base station sets a related parameter according to the time-to-live, and then, when the base station transmits the packet according to the related parameter, a user experience effect can be ensured.

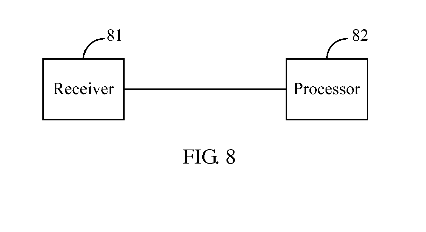

FIG. 8 is a schematic structural diagram of an embodiment of a base station according to the present invention, where the base station includes a receiver 81 and a processor 82. The receiver 81 is configured to receive a survival report sent by a terminal, where the survival report includes time-to-live of a packet on a network node, the time-to-live is determined by the terminal according to a terminal status, and the terminal status is time, which can be maintained, for playing a currently buffered packet, or the terminal status includes a triggering event and time, which can be maintained, for playing a currently buffered packet. The processor 82 is configured to set a packet transmission parameter according to the time-to-live, so that the processor 82 transmits the packet according to the packet transmission parameter.

Optionally, the base station may further include:
a first sender, configured to send a configuration message to the terminal, where the configuration message includes information about the triggering event, so that the terminal reports the survival report when the triggering event occurs, where the triggering event includes any one of the following items:
   buffered data is blank, or playing stops due to blank buffered data; or
   initial buffering ends, and playing starts; or
   buffering ends due to a playing stop, and playing starts; or
   playing stops due to a user behavior; or
   buffering reaches a preset threshold; or
   a packet loss is detected; or
   a configured reporting period arrives; or
   the base station performs triggering.

Optionally, the base station may further include:
a second sender, configured to send a triggering message to the terminal, where the triggering message is used to trigger the terminal to send the survival report to the base station.

Optionally, the processor is further configured to detect the following event: a packet loss occurs in at least one of the following layers: a PDCP layer, an RLC layer, and a MAC layer; or a cell handover of the terminal occurs; and
the second sender is specifically configured to send the triggering message when the processor detects the event.

Optionally, the survival report received by the receiver further includes information about a triggering event that has occurred, so that the base station further sets the packet transmission parameter according to the information about the triggering event that has occurred.

Optionally, the survival report further includes identification information of a first packet, and the base station further includes:
a third sender, configured to transmit the first packet within the time-to-live according to the packet transmission parameter.

Optionally, the packet transmission parameter includes at least one of the following items:
duration of a discard timer at the PDCP layer;
the maximum number of HARQ retransmissions at the MAC layer;
the maximum number of ARQ retransmissions at the RLC layer; and
a user scheduling policy.

In this embodiment, a base station may set a related parameter according to time-to-live reported by a terminal, where the time-to-live is determined by the terminal according to a current situation of a packet. The time-to-live is dynamically determined; therefore, it may be implemented that when the packet is transmitted according to the related parameter, a user experience effect can be ensured.

Persons of ordinary skill in the art may understand that all or a part of the steps of the methods in the foregoing embodiments may be implemented by a program instructing relevant hardware. The foregoing program may be stored in a computer readable storage medium. When the program runs, the steps of the methods in the foregoing embodiments are performed. The foregoing storage medium includes any medium that can store program code, such as a ROM, a RAM, a magnetic disk, or an optical disc.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof; however, these modifications or replacements do not make the essence of corresponding technical solutions depart from the scope of the technical solutions in the embodiments of the present invention.

## Claims

1. A method for setting a parameter in a data transmission service, wherein the method comprises:
determining, by a terminal, time-to-live of a packet on a network node according to a terminal status, wherein the terminal status is time, which can be maintained, for playing a currently buffered packet, or the terminal status comprises a triggering event and time, which can be maintained, for playing a currently buffered packet; and
sending, by the terminal, a survival report to a base station, wherein the survival report comprises the time-to-live, so that the base station sets a packet transmission parameter according to the time-to-live.

2. The method according to claim 1, wherein the determining time-to-live of a packet on a network node according to a terminal status comprises:
when the terminal status is the time, which can be maintained, for playing the currently buffered packet, determining the time-to-live according to time for which currently playing a video frame lasts and time, which can be maintained, for playing a remaining packet in a buffer except the video frame that is currently played; or determining the time-to-live according to time, which can be maintained, for playing a remaining packet in a buffer except the video frame that is currently played;
or,
when the terminal status comprises the triggering event and the time, which can be maintained, for playing the currently buffered packet, determining the time-to-live according to the triggering event of the terminal, time for which currently playing a video frame lasts, and time, which can be maintained, for playing a remaining packet in a buffer except the video frame that is currently played; or according to the triggering event of the terminal and time, which can be maintained, for playing a remaining packet in a buffer except the video frame that is currently played.

3. The method according to claim 1, wherein before the sending, by the terminal, a survival report to a base station, the method further comprises:
confirming, by the terminal, a reporting policy, wherein the reporting policy comprises information about the triggering event, so that the terminal reports the survival report when the triggering event occurs; or
receiving, by the terminal, a configuration message sent by the base station, wherein the configuration message comprises information about the triggering event, so that the terminal reports the survival report when the triggering event occurs.

4. The method according to claim 3, wherein the triggering event comprises any one of the following items:
buffered data is blank, or playing stops due to blank buffered data; or
initial buffering ends, and playing starts; or
buffering ends due to a playing stop, and playing starts; or
playing stops due to a user behavior; or
buffering reaches a preset threshold; or
a packet loss is detected; or
a configured reporting period arrives; or
the base station performs triggering.

5. The method according to claim 1, wherein before the sending, by the terminal, a survival report to a base station, the method further comprises:
receiving, by the terminal, a triggering message sent by the base station, wherein the triggering message is used to trigger the terminal to send the survival report to the base station.

6. The method according to claim 5, wherein the triggering message is sent after the base station detects a packet loss in at least one of the following layers: a Packet Data Convergence Protocol PDCP layer, a Radio Link Control RLC layer, and a Radio Link Control MAC layer; or the triggering message is sent after the base station detects a cell handover of the terminal.

7. The method according to claim 3, wherein the survival report further comprises information about a triggering event that has occurred, so that the base station further sets the packet transmission parameter according to the information about the triggering event that has occurred.

8. The method according to claim 1, wherein the time-to-live is time-to-live of a first packet, the survival report further comprises identification information of the first packet, and the first packet is a next packet that needs to be received by the terminal, so that the base station transmits the first packet within the time-to-live according to the packet transmission parameter.

9. The method according to any one of claims 1 to 8, wherein the packet transmission parameter comprises at least one of the following items:
duration of a discard timer at the PDCP layer;
the maximum number of hybrid automatic repeat request HARQ retransmissions at the MAC layer;
the maximum number of automatic repeat request ARQ retransmissions at the RLC layer; and
a user scheduling policy.

10. A method for setting a parameter in a data transmission service, wherein the method comprises:
receiving, by a base station, a survival report sent by a terminal, wherein the survival report comprises time-to-live of a packet on a network node, the time-to-live is determined by the terminal according to a terminal status, and the terminal status is time, which can be maintained, for playing a currently buffered packet, or the terminal status comprises a triggering event and time, which can be maintained, for playing a currently buffered packet; and
setting, by the base station, a packet transmission parameter according to the time-to-live, so that the base station transmits the packet according to the packet transmission parameter.

11. The method according to claim 10, wherein before the receiving, by a base station, a survival report sent by a terminal, the method further comprises:
sending, by the base station, a configuration message to the terminal, wherein the configuration message comprises information about the triggering event, so that the terminal reports the survival report when the triggering event occurs.

12. The method according to claim 11, wherein the triggering event comprises any one of the following items:
buffered data is blank, or playing stops due to blank buffered data; or
initial buffering ends, and playing starts; or
buffering ends due to a playing stop, and playing starts; or
playing stops due to a user behavior; or
buffering reaches a preset threshold; or
a packet loss is detected; or
a configured reporting period arrives; or
the base station performs triggering.

13. The method according to claim 10, wherein before the receiving, by a base station, a survival report sent by a terminal, the method further comprises:
sending, by the base station, a triggering message to the terminal, wherein the triggering message is used to trigger the terminal to send the survival report to the base station.

14. The method according to claim 13, wherein the sending, by the base station, a triggering message to the terminal comprises:
sending, by the base station, the triggering message after detecting a packet loss in at least one of the following layers: a Packet Data Convergence Protocol PDCP layer, a Radio Link Control RLC layer, and a Radio Link Control MAC layer; or
sending, by the base station, the triggering message after detecting a cell handover of the terminal.

15. The method according to claim 11, wherein the survival report further comprises information about a triggering event that has occurred, so that the base station further sets the packet transmission parameter according to the information about the triggering event that has occurred.

16. The method according to claim 10, wherein the survival report further comprises identification information of a first packet, the first packet is a next packet that needs to be received by the terminal, and the method further comprises:
transmitting, by the base station, the first packet within the time-to-live according to the packet transmission parameter.

17. The method according to any one of claims 9 to 14, wherein the packet transmission parameter comprises at least one of the following items:
duration of a discard timer at the PDCP layer;
the maximum number of hybrid automatic repeat request HARQ retransmissions at the MAC layer;
the maximum number of automatic repeat request ARQ retransmissions at the RLC layer; and
a user scheduling policy.

18. A terminal, wherein the terminal comprises:
a processor, configured to determine time-to-live of a packet on a network node according to a terminal status, wherein the terminal status is time, which can be maintained, for playing a currently buffered packet, or the terminal status comprises a triggering event and time, which can be maintained, for playing a currently buffered packet; and
a sender, configured to send a survival report to a base station, wherein the survival report comprises the time-to-live, so that the base station sets a packet transmission parameter according to the time-to-live.

19. The terminal according to claim 18, wherein the processor is specifically configured to:
when the terminal status is the time, which can be maintained, for playing the currently buffered packet, determine the time-to-live according to time for which currently playing a video frame lasts and time, which can be maintained, for playing a remaining packet in a buffer except the video frame that is currently played; or determine the time-to-live according to time, which can be maintained, for playing a remaining packet in a buffer except the video frame that is currently played;
or,
when the terminal status comprises the triggering event and the time, which can be maintained, for playing the currently buffered packet, determine the time-to-live according to the triggering event of the terminal, time for which currently playing a video frame lasts, and time, which can be maintained, for playing a remaining packet in a buffer except the video frame that is currently played; or according to the triggering event of the terminal and time, which can be maintained, for playing a remaining packet in a buffer except the video frame that is currently played.

20. The terminal according to claim 18, wherein the terminal further comprises:
a memory, configured to store a configured reporting policy, wherein the reporting policy comprises information about the triggering event, so that the terminal reports the survival report when the triggering event occurs; or
a first receiver, configured to receive a configuration message sent by the base station, wherein the configuration message comprises information about the triggering event, so that the terminal reports the survival report when the triggering event occurs.

21. The terminal according to claim 20, wherein the triggering event corresponding to the information, which is received by the first receiver, about the triggering event comprises any one of the following items:
buffered data is blank, or playing stops due to blank buffered data; or
initial buffering ends, and playing starts; or
buffering ends due to a playing stop, and playing starts; or
playing stops due to a user behavior; or
buffering reaches a preset threshold; or
a packet loss is detected; or
a configured reporting period arrives; or
the base station performs triggering.

22. The terminal according to claim 18, wherein the terminal further comprises:
a second receiver, configured to receive a triggering message sent by the base station, wherein the triggering message is used to trigger the terminal to send the survival report to the base station; wherein
the sender is specifically configured to send the survival report to the base station when the second receiver receives the triggering message.

23. The terminal according to claim 22, wherein the triggering message received by the second receiver is sent after the base station detects a packet loss in at least one of the following layers: a Packet Data Convergence Protocol PDCP layer, a Radio Link Control RLC layer, and a Radio Link Control MAC layer; or the triggering message is sent after the base station detects a cell handover of the terminal.

24. The terminal according to claim 20, wherein the survival report sent by the sender further comprises the information about a triggering event that has occurred, so that the base station further sets the packet transmission parameter according to the information about the triggering event that has occurred.

25. The terminal according to claim 18, wherein the time-to-live determined by the processor is time-to-live of a first packet, the survival report sent by the sender further comprises identification information of the first packet, and the first packet is a next packet that needs to be received by the terminal, so that the base station transmits the first packet within the time-to-live according to the packet transmission parameter.

26. The terminal according to any one of claims 18 to 25, wherein the packet transmission parameter comprises at least one of the following items:
duration of a discard timer at the PDCP layer;
the maximum number of hybrid automatic repeat request HARQ retransmissions at the MAC layer;
the maximum number of automatic repeat request ARQ retransmissions at the RLC layer; and
a user scheduling policy.

27. A base station, wherein the base station comprises:
a receiver, configured to receive a survival report sent by a terminal, wherein the survival report comprises time-to-live of a packet on a network node, the time-to-live is determined by the terminal according to a terminal status, and the terminal status is time, which can be maintained, for playing a currently buffered packet, or the terminal status comprises a triggering event and time, which can be maintained, for playing a currently buffered packet; and
a processor, configured to set a packet transmission parameter according to the time-to-live, so that the processor transmits the packet according to the packet transmission parameter.

28. The base station according to claim 27, wherein the base station further comprises:
a first sender, configured to send a configuration message to the terminal, wherein the configuration message comprises information about the triggering event, so that the terminal reports the survival report when the triggering event occurs.

29. The base station according to claim 28, wherein the triggering event corresponding to the information, which is sent by the first sender, about the triggering event comprises any one of the following items:
buffered data is blank, or playing stops due to blank buffered data; or
initial buffering ends, and playing starts; or
buffering ends due to a playing stop, and playing starts; or
playing stops due to a user behavior; or
buffering reaches a preset threshold; or
a packet loss is detected; or
a configured reporting period arrives; or
the base station performs triggering.

30. The base station according to claim 27, wherein the base station further comprises:
a second sender, configured to send a triggering message to the terminal, wherein the triggering message is used to trigger the terminal to send the survival report to the base station.

31. The base station according to claim 30, wherein:
the processor is further configured to detect the following event: a packet loss occurs in at least one of the following layers: a Packet Data Convergence Protocol PDCP layer, a Radio Link Control RLC layer, and a Radio Link Control MAC layer; or a cell handover of the terminal occurs; and
the second sender is specifically configured to send the triggering message when the processor detects the event.

32. The base station according to claim 28, wherein the survival report received by the receiver further comprises information about a triggering event that has occurred, so that the base station further sets the packet transmission parameter according to the information about the triggering event that has occurred.

33. The base station according to claim 27, wherein the survival report further comprises identification information of a first packet, and the base station further comprises:
a third sender, configured to transmit the first packet within the time-to-live according to the packet transmission parameter.

34. The base station according to any one of claims 27 to 33, wherein the packet transmission parameter comprises at least one of the following items:
duration of a discard timer at the PDCP layer;
the maximum number of hybrid automatic repeat request HARQ retransmissions at the MAC layer;
the maximum number of automatic repeat request ARQ retransmissions at the RLC layer; and
a user scheduling policy.
